# EUROPEAN PATENT APPLICATION

(11) **EP 3 739 525 A1**
(43) Date of publication of application: **18.11.2020**
(21) Application number: 19174282.4
(22) Date of filing: 14.05.2019
(51) Int. Cl.: G06N 3/08, G05B 13/00, G06N 5/00, G06N 7/00

(54) **INFORMED IMPERCEPTIBLE EXPLORATION BASED ON CONTROL-POLICIES**

(71) Applicant: Siemens Aktiengesellschaft, 80333 München (DE)
(72) Inventor: Heesche, Kai, 81539 München (DE); Kaiser, Markus, 80539 München (DE); Sterzing, Volkmar, 85579 Neubiberg (DE)

(57) **Abstract**

The present invention relates to a computerized method for regulating and/ or controlling a technical system (1), a technical system (1), a computer program product, and d computer-readable storage medium.

The computerized method is characterized by:
- Measuring (S1) the system state,
- defining (S2) system actions based on an exploration rule and the measured system state, whereas the system actions lead to previously discovered system states and to yet undiscovered system states,
- simulating (S3) the effect of the system actions on the system state by a simulation model, whereas control policies are incorporated into the simulation model,
- evaluating (S4) the effect of the system actions,
- selecting (S5) a system action based on the evaluation and control policies, and
- performing (S6) the selected system action by the technical system.

## Description

### Field of the Invention

The present invention relates to a computerized method for regulating and/ or controlling a technical system, a technical system, a computer program product, and a computer-readable storage medium.

### Background of the Invention

Complex technical systems such as gas turbines or wind turbines can be optimized using data driven approaches. Such approaches are especially relevant when improving aspects of the system with long-term impact or parts of systems which are hard to describe using classical approaches such as physical models. Examples include the combustion dynamics or (NOx or CO) emissions of gas turbines or efficiency, wake reduction or life time consumption of wind turbines.

The classical approach to optimizing such system is to use domain knowledge to derive mathematical descriptions and physical models which approximate the real system behaviour. Given such a description, possible optimizations of the true system can be found by, for example, applying results from control theory. It is usually impossible or at least infeasible to model a complete system. Instead, the domain expert carefully chooses approximations which make models easier to compute. This approach has multiple shortcomings. First, due to the limited approximation accuracy, optimizations found on such models might not improve performance in the real system. Second, this process requires extensive expert knowledge which might not be entirely available in some domains (e.g. wake reduction) or might result in models which are infeasible to compute in other domains (e.g. combustion dynamics). And third, if the model and real system deviate, it is a difficult task to improve the model to handle new effects or new application domains.

Data-driven approaches try to overcome these shortcomings. Instead of domain experts formulating models, data-driven approaches learn about a system's behaviour from historical observations. Learning about a system means recovering a predictor which can, given a system's current state and actions taken to control it, predict the system's response. Take the combustion dynamics of a gas turbine as an example. The stochastic combustion process leads to pressure variations and accelerations (= combustion dynamics) applied to the gas turbine which must not exceed a certain threshold. The amount of acceleration is directly dependent on the current state of the turbine consisting of ambient features such as air pressure or humidity and the internal turbine state such as current power output, total fuel flow, fuel fractions or the exhaust temperature. Given enough heterogenous observations, a data-driven model can recover dependencies between the control actions, the turbine state and the resulting combustion dynamics. For example, increasing the exhaust temperature can increase accelerations. Such dependencies are found using regression models such as neural networks or Gaussian processes, which are methods from machine learning.

The success of these methods critically depends on the quantity and quality of the data used during training. For data-driven approaches to be successful they need to have access to as diverse data as possible. Regression models can only recover dependencies which are present in the data. Additionally, many observations are subject to noise which, for example in the case of combustion dynamics, can be substantial. It is generally not enough to observe some effect once to be able to confidently identify it. In an industrial setting, historical data is often available from products currently in operation by customers (e.g. gas turbines currently used for power production). This data usually is not very diverse because products are typically configured to operate at predefined setpoints to ensure stable operation. Those setpoints are frequently constant or governed by simple control curves of the controller, which data-driven approaches seek to improve.

The classic solution to avoiding dangerous situation in data collection is to not explore at all. That is, to only use the historical data generated by the current default controller (or policy). Safe exploration avoids states of operation which are known to be critical. Usually, these policies have been verified to control the system in a safe and reliable way. This approach avoids danger completely but may sacrificing some efficiency to increase information gain and not yield enough data to completely model the system behaviour and enable a data-driven optimization to identify improvements.

In the control literature, various schemes exist which actively explore the space of system states and actions. These schemes have usually not been designed to utilize system models and therefore do not take safety-considerations into account. Instead, the decision about which directions of the system to explore are made purely by taking potential information gain into account. This makes it very hard to employ such schemes in common contexts, since the repercussions of exploring the system might be severe. Blindly exploring the space of possible states (for example by varying the exhaust temperature of a turbine randomly) usually has detrimental effects such as reducing efficiency or impacting the lifetime expectation of the system. In some situations, it could even cause safety issues.

Imperceptible exploration uses a previously trained regression model like a neural network to simulate the effects of exploration. Exploration actions are only applied if the model-predicted effects remain below an imperceptibility threshold that was defined by experts. The main goal of imperceptible exploration is to gather informative data but at the same time ensure that neither safety, live time consumption nor efficiency are affected negatively.

### Summary of the Invention

The objective of the present invention is to provide a solution for improving imperceptible exploration in technical systems while generating informative data and ensuring stable operation.

To accomplish the objective, the present invention provides a computerized method for regulating and/ or controlling a technical system, a technical system, a computer program product, and a computer-readable storage medium. The invention is given by the features of the independent claims.

Advantageous embodiments are provided in the dependent claims. Further features, application possibilities, and advantages of the invention result from the following description.

According to the invention the objective is accomplished by incorporating control policies in a simulation system of the technical system and in the selection process of system actions.

The invention claims a computerized method for regulating and/ or controlling a technical system. The method is characterized by:
- Measuring the system state,
- defining system actions based on an exploration rule and the measured system state, whereas the system actions lead to previously discovered system states and to yet undiscovered system states,
- simulating the effect of the system actions on the system state by a simulation model, whereas control policies are incorporated into the simulation model,
- evaluating the effect of the system actions,
- selecting a system action based on the evaluation and control policies, and
- performing the selected system action by the technical system.

According to a further embodiment the simulation model was trained using data of previously discovered system states and the corresponding system actions.

According to a further embodiment the simulation model is a regression model.

The advantage of the invention is that it includes an approach of domain-knowledge based imperceptible exploration which is an extension of the imperceptible exploration approach. In normal imperceptible exploration (as described above), random system actions are proposed and evaluated by the simulating regression model (simulation model which is a regression model).

The simulating regression model rejects the system action if its (simulated) effect falls outside of what is deemed imperceptible by the control policies (e.g. by experts). The addition of this invention to this previous scheme is to incorporate expert knowledge in form of control policies both into the system models (simulation models) and the process by which system actions are evaluated und selected/ chosen.

It is important to note that the inventive approach still is a data-driven one, that is, that purely expert-formulated models are either impossible or infeasible. Instead, it is assumed that experts can formulate abstract or intuitive knowledge or constraints (control policies) about the system which the simulation models should satisfy.

According to a further embodiment the regression model is a neural network or uses models from Bayesian machine learning especially Gaussian processes and/ or hierarchical Gaussian models.

According to a further embodiment the control policies include prior knowledge about the system, defined constraints, mathematical descriptions and/ or physical system models. The prior knowledge about the system can be gained by including expert knowledge.

According to a further embodiment the selection of a system action is in addition optimized to maximize the learning effect of the simulation model and to minimize the risk of violating the control policies.

It is a goal of the present invention to realize more informed imperceptible exploration. Incorporating expert knowledge/ control policies into the regression model allows to better avoid taking actions which break imperceptibility. Further, more structured predictions and uncertainty estimations about predictions allow to refine the action selection process. Instead of randomly selecting actions which do not violate imperceptibility, the uncertainties of the simulation model and already built control policies are used to select the system actions which are most informative, thereby combining safe exploration with information-maximizing exploration.

An observation/ measured system state derived from taking a system action/ effect of a system action on the system state is considered informative if adding it to the regression model reduces the model's uncertainty. Whether this is the case depends on both the currently available data and the prior knowledge

In the context of combustion dynamics, a simulation model which has no prior knowledge about critical points, and which has never observed nonlinear behaviour might be overconfident about its predictions because it has no reason to assume a nonlinear behaviour. System action for explorations might therefore be selected at random. If the prior knowledge about critical points is added to the system e.g. in form of control policies, the system action selection process will try to find the critical point because this heavily reduces predictive uncertainties. At the same time imperceptibility constraints e.g. in form of control policies will prevent the model to explore too much further because dramatic increases in accelerations are forbidden, even if these system actions would be considered informative.

According to a further embodiment the regulating and/ or controlling is performed imperceptible. In the context of the invention "imperceptible" means that it has no/ minimal effect on system performance and is imperceptible for the system user.

According to a further embodiment the technical system is a gas turbine.

According to a further embodiment the gas turbine system state includes current and longitudinal values of combustion dynamics, efficiency of the combustion, fluid dynamics, emissions and/ or inner system parameter of the gas turbine. Example for inner system parameter of the gas turbine are the used fuel and the exhaust gas temperature.

According to a further embodiment the technical system is a wind turbine.

According to a further embodiment the wind turbine system state includes current and longitudinal values of efficiency, wake reduction, environmental conditions and/ or inner system parameter of the wind turbine. Example for environmental conditions are temperature, air pressure, wind propagation, wind speed and turbulences. Examples for inner system parameter of the wind turbine are the current inclination angle of the rotor leaves, the gondola orientation (yaw position), the rotation speed, and the turbine control (pitching, change of yaw position).

According to a further embodiment the technical system is a manufacturing system (e.g. process industry setups such as paper production).

In the following, the invention is detailed using gas turbines as an example. The ideas and concepts can however be applied to a multitude of other industrial systems and processes.

As mentioned above, control policies (e.g. expert knowledge) are incorporated in two steps of the data exploration process: In the regression model und in the action selection process.

As described above, the reason why exploration is performed, and an exploration rule are applied in the first place is because a potential gain of an existing control policy/ control parameter or a new control policy/ control parameter is introduced but available data distribution of it is not existent, not diverse or not informative enough. As a direct result, any regression model trained to simulate system reactions to proposed system actions will always be subject to these same restrictions and cannot in general faithfully simulate the system's reactions to previously unknown system actions/ yet undiscovered resulting system states.

This invention tackles this problem by using models from Bayesian machine learning such as Gaussian processes. Bayesian machine learning is a branch of general machine learning concerned with the quantification of uncertainty based on both prior knowledge (e.g. in form of control policies and knowledge on reactive system states) and observations.

Both aspects are used in this invention: Intuitive prior knowledge is encoded in form of control policies; such as the fact that if e.g. the amount of pilot gas in a gas turbine is reduced by a too large amount, new system behaviour emerges which is not contained in data from standard operations. Experts know that there must exist a critical point before which the dependency between pilot gas and observed acceleration is approximatively linear. However, after this point has been reached, combustion dynamics rise dramatically. These critical operation regions must be avoided. This can be defined in control policies

This knowledge, however, is uncertain: For a given gas turbine, it is unclear where this critical region is located. This knowledge must be extracted from the data. Still, the knowledge that a critical region must exist is useful for predictions in the simulation model/ regression model since as long as there is no data available to proof the contrary, the possibility that the critical point might be reached is considered, leading to high predictive uncertainties.

Note that knowledge about a critical point can also decrease uncertainties: If new data is observed that does not conform to the linear dependencies observed previously, these data points can be explained using the behaviour/ resulting system state after the critical point, leading to a more precise simulation model.

Examples for prior knowledge which shapes the exploration process are symmetric behaviour in the dynamics and specific optimization goals. If it is known that some parts of a system behave like, for example, a parabola, it is enough to explore only one half of the function to drastically reduce uncertainty about the other half. This is typically the case in symmetric designed situations where a small asymmetry has been introduced as a control parameter. The direction of the deviation has no effect. A-Stage and B-Stage fuel fractions of a can-based gas turbine are typically equal, and their difference is the control parameter. Crucial for the emissions is the absolute value of the difference.

Knowledge about optimization goals helps in deciding which parts of a space to explore. In terms of combustion dynamics, the objective is usually to keep either dynamics below some threshold defined in the control policies, or alternatively emissions below a threshold defined in the control policies, minimizing combustion dynamics. It is therefore specifically interesting to explore regions close to but not above the threshold defined in the control policies. Both, regions with very low dynamics and very high dynamics do not need to be explored because uncertain predictions do not reduce controller performance.

The present invention further claims a technical system, comprising a regulating and/ or controlling unit designed to execute a method according to one of the previous claims.

The present invention further claims a computer program product comprising instructions which, when the program is executed by the computational device, cause the computational device to carry out the steps of the method according to one of the claims 1 to 12.

The present invention further claims a computer-readable storage medium comprising instructions which, when executed by the computational device, cause the computational device to carry out the steps of the method according to one of the claims 1 to 12.

The present invention combines advantages of existing approaches to exploration in industrial systems. The approach can at the same time ensure safety and imperceptibility while also choosing system actions which are most informative. Incorporating expert knowledge in form of control policies into simulation models adds a new quality which enables to specifically explore unknown parts of the system where the dynamics are known to be of interest. This increases overall performance since the collected data will be more diverse and informative, leading to better control policies. At the same time, prior knowledge about behaviour as of yet unobserved in the data allows the simulation models to avoid unsafe regions while at the same time identifying potentially interesting regions, making the exploration process easier to apply in practice and limit or entirely prevent additional life time consumption and related costs of the system during exploration.

Further benefits and advantages of the present invention will become apparent after a careful reading of the detailed description with appropriate reference to the accompanying drawings.

### Brief Description of the Drawings

- Fig. 1: shows a flow diagram and
- Fig. 2: a block diagram of a technical system.

### Detailed Description of the Invention

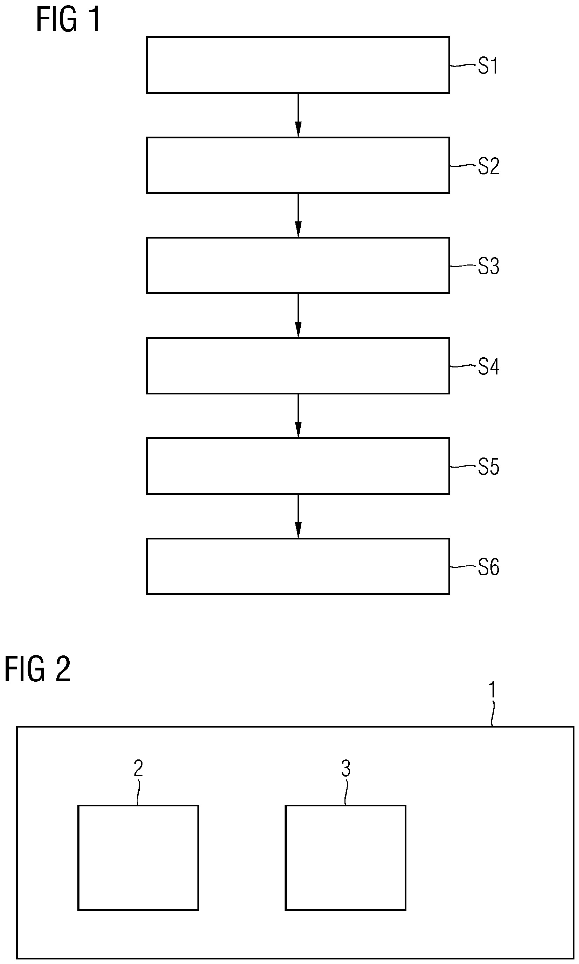

**Fig. 1** shows a flow diagram of the inventive computerized method for regulating and/ or controlling a technical system. The method is characterized by the following steps:
- In step S1 the system state (e.g. current and longitudinal values of combustion dynamics, efficiency of the combustion, fluid dynamics, emissions and/ or inner system parameter in case of a gas turbine or current and longitudinal values of efficiency, wake reduction, environmental conditions and/ or inner system parameter in case of a wind turbine) is measured,
- in step S2 system actions are defined based on an exploration rule and the measured system state, whereas the system actions lead to previously discovered system states and to yet undiscovered system states,
- in step S3 the effect of the system actions on the system state is simulated by a simulation model, whereas control policies are incorporated into the simulation model,
- in step S4 the effect of the system actions is evaluated,
- in step S5 a system action is selected based on the evaluation and control policies (one goal of step S5 is to maximize the learning effect on the simulation model and to minimize the risk for reaching an unsafe system state), and
- in step S6 the selected system action is performed by the technical system.

Fig. 2 shows a block diagram of a technical system 1. The technical system 1 comprises a regulating unit 2 and a controlling unit 3 designed to execute the method described in Fig. 1.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. Computerized method for regulating and/ or controlling a technical system (1), **characterized by:**
- Measuring (S1) the system state,
- defining (S2) system actions based on an exploration rule and the measured system state, whereas the system actions lead to previously discovered system states and to yet undiscovered system states,
- simulating (S3) the effect of the system actions on the system state by a simulation model, whereas control policies are incorporated into the simulation model,
- evaluating (S4) the effect of the system actions,
- selecting (S5) a system action based on the evaluation and control policies, and
- performing (S6) the selected system action by the technical system.

2. Method according to claim 1, **whereas**
the simulation model was trained using data of previously discovered system states and the corresponding system actions.

3. Method according to one of the previous claims, **whereas**
the simulation model is a regression model.

4. Method according to claim 3, **whereas**
the regression model is a neural network or uses models from Bayesian machine learning especially Gaussian processes and/ or hierarchical Gaussian models.

5. Method according to one of the previous claims, **whereas**
the control policies include prior knowledge about the system, defined constraints, mathematical descriptions and/ or physical system models.

6. Method according to one of the previous claims, **whereas** the selection (S5) of a system action is in addition optimized to maximize the learning effect of the simulation model and to minimize the risk of violating the control policies.

7. Method according to one of the previous claims, **whereas**
the regulating and/ or controlling is performed imperceptible.

8. Method according to one of the previous claims, **whereas**
the technical system (1) is a gas turbine.

9. Method according to claim 8, **whereas**
the system state includes current and longitudinal values of combustion dynamics, efficiency of the combustion, fluid dynamics, emissions and/ or inner system parameter of the gas turbine.

10. Method according to one of claims 1 to 7, **whereas**
the technical system (1) is a wind turbine.

11. Method according to claim 10, **whereas**
the system state includes current and longitudinal values of efficiency, wake reduction, environmental conditions and/ or inner system parameter of the wind turbine.

12. Method according to one of claims 1 to 7, **whereas**
the technical system (1) is a manufacturing system.

13. Technical system (1), comprising a regulating (2) and/ or controlling unit (3) designed to execute a method according to one of the previous claims.

14. A computer program product comprising instructions which, when the program is executed by the computational device, cause the computational device to carry out the steps of the method according to one of the claims 1 to 12.

15. A computer-readable storage medium comprising instructions which, when executed by the computational device, cause the computational device to carry out the steps of the method of according to one of the claims 1 to 12.
